# EUROPÄISCHE PATENTSCHRIFT

(11) **EP 0 575 366 B1**
(45) Veröffentlichungstag und Bekanntmachung des Hinweises auf die Patenterteilung: **21.09.1994**
(21) Anmeldenummer: 92905489.8
(22) Anmeldetag: 26.02.1992
(51) Int. Cl.: G01N 3/30

(54) **VERFAHREN UND VORRICHTUNG ZUR DYNAMISCHEN PRÜFUNG STARK SCHOCKBELASTETER GURTSCHLÖSSER**
METHOD AND DEVICE FOR THE DYNAMIC TESTING OF SEAT-BELT LOCKS UNDER HIGH SHOCK LOADS
PROCEDE ET DISPOSITIF POUR L'ESSAI DYNAMIQUE DE BOUCLES DE CEINTURE FORTEMENT SOLLICITEES PAR DES CHOCS

(30) Priorität: 04.03.1991 DE 4106787; 08.02.1992 DE 4203709
(43) Veröffentlichungstag der Anmeldung: 29.12.1993
(73) Patentinhaber: INDUSTRIEANLAGEN-BETRIEBSGESELLSCHAFT M.B.H., D-85521 Ottobrunn (DE)
(72) Erfinder: BALTZ, Rolf, D-8206 Bruckmühl (DE); UNTERBERG, Franzjosef, D-8012 Riemerling (DE); PATZELT, Franz, D-8028 Taufkirchen (DE)
(74) Vertreter: Bohnenberger, Johannes, Dr.
(86) Internationale Anmeldenummer: EP9200401
(87) Internationale Veröffentlichungsnummer: WO9215856

(56) Entgegenhaltungen:
- GB-A- 1 085 064
- US-A- 3 426 578
- US-A- 3 535 912
- US-A- 3 750 457
- US-A- 4 433 570

## Beschreibung

Die Erfindung betrifft ein Verfahren und die zu seiner Realisierung erforderliche Prüfvorrichtung für stark schockbelastete Gurtschlösser im Wirkungsverbund mit Gurtstrammern (auch Gurtstraffer genannt). Der in der Regel am Boden oder am Sitz des Pkw montierte Gurtstrammer zieht im Crashfall den üblicherweise als Peitsche bezeichneten Befestigungsteil für das Gurtschloß in einer sehr kurzen Zeitspanne scharf an, um den normalerweise lose angelegten Sicherheitsgurt straff zu spannen. Bei diesem Strammvorgang, der z.B. durch Federkraft oder pyrotechnisch ausgelöst wird, treten an den Einzelelementen (Peitsche, Gurtschloß, Gurtzunge) sehr hohe Schockbelastungen auf, die jedoch keine Fehlfunktionen verursachen dürfen. Im Crashfall muß sichergestellt sein, daß das Gurtschloß während der Schockbelastung durch den Strammvorgang und während der zeitlich nachfolgenden Belastung durch die Zugspannung in den Gurten, verursacht durch das Abfangen des Insassen, zuverlässig geschlossen bleibt. Danach muß es sich leicht öffnen lassen.

Bei der Funktionsprüfung von Gurtschlössern muß daher unterschieden werden zwischen der hochenergetischen Schockbelastung durch den Strammvorgang und der Belastung durch das Abfangen des Insassen.

Das erfindungsgemäße Verfahren und die entsprechende Prüfvorrichtung beziehen sich ausschließlich auf die hochenergetische Schockprüfung.

Der Stand der Prüftechnik von Gurtschlössern im Zusammenwirken mit Gurtstrammern ist dadurch gekennzeichnet, daß von jeder Serie von Gurtstrammern und zugehörigen Gurtschlössern eine statistisch hinreichende Anzahl ausgelöst wird, um so die sichere Schließfunktion des Gurtschlosses zu prüfen.

Bei dieser Vorgehensweise können nur die bauartbedingten Sollbelastungen - aber keine Überlasten - erzeugt werden. Diese sind jedoch notwendig, um die tatsächlichen Funktionsgrenzen des Schlosses zu ermitteln bzw. um gewünschte Sicherheitsreserven für definierte Überlastbereiche gezielt realisieren und nachweisen zu können.

Ziel der Erfindung sind daher ein Verfahren und eine Prüfvorrichtung, die die Simulation der betriebstypischen wie der überhöhten Schockbelastungen für die beschriebenen Anwendungen schnell, einfach und vergleichsweise billig ermöglicht, wobei die Schockbelastungen quantitativ und zuverlässig reproduzierbar ansteuerbar sein müssen.

Die zu lösende Aufgabe besteht somit aus zwei eng zusammenhängenden Teilaufgaben:
Erstens muß die Schockbelastung separat an jedem Bauteil der Funktionsgruppe quantitativ erfaßt und kontrolliert werden, um die Absolutlastwerte für jedes Bauteil zu gewinnen und um den Schockabbau in den Bauteilen entsprechend ihrem konstruktiven Verbund quantitativ erfassen und kontrollieren zu können (Wirkungskette).

Zweitens müssen zuverlässig reproduzierbare Versuchsbedingungen sichergestellt werden, und zwar für Beschleunigungsamplituden bis zum 3 - 4fachen der tatsächlich auftretenden Belastungen.

Der Stand der Technik zur Schockerzeugung für Prüfobjekte der vorliegenden Art und Größe ist durch Fallturmanlagen mit einem (seil-)geführten Fallhammer gekennzeichnet, wie sie im Prinzip in der US 3.426.578 und dem DE-GM 69 34 387 beschrieben werden. Fallturmanlagen nach dem Stand der Technik erlauben Schockanregungen bis ca. 10.000 g bei Stoßzeiten im Bereich von »s, abhängig von der Fallhöhe, der Masse des Fallhammers sowie seiner Formgebung, dem Material und dem Aufprallmedium. Für niedrigere Schockbeschleunigungen ist auch ein Pendelhammer-Prüfstand wie er z.B. in der JP 63-11 33 42 A beschrieben wird, einsetzbar. Ein Sensor zur Schockmessung ist in der JP 63-28 44 51 A erwähnt, allerdings nicht appliziert am Fallhammer oder am Prüfling, sondern an einem neutralen Zwischenstück.

Bei Steigerung der o.g. Spitzenbeschleunigung auf 3 - 4fache Werte kann jedoch der Fallhammer zu störenden Eigenschwingungen angeregt werden, die die Reproduzierbarkeit des Schocks nicht mehr gewährleisten und damit das Einsatzfeld einschränken. Ferner treten an der Aufprallfläche des Hammers nach wenigen Schocks Materialverformungen und Risse auf, die die weitere Nutzung des Hammers ausschließen. Gleiches gilt für das Prallmedium.

Konstruktive Maßnahmen zur Verringerung der Eigenschwingungen des Fallhammers sowie Angaben zur Formgebung und zur Materialauswahl für den Fallhammer für die hier erforderlichen Belastungswerte werden in der Fachliteratur nicht ausgewiesen.

Ausgehend von diesem Stand der Technik wird die o.g. zweiteilige Aufgabe wie folgt gelöst:

Als Prüfstandsanordnung wird eine Fallturmanlage mit Fallhammer 2 und Seilführung 10 mit Gleithülsen 11 gewählt. Die reproduzierbare hohe Schockbelastung wird durch die Formgebung und die Materialauswahl des Fallhammers 2 und durch die Materialauswahl des Prallmediums 14 bestimmt.

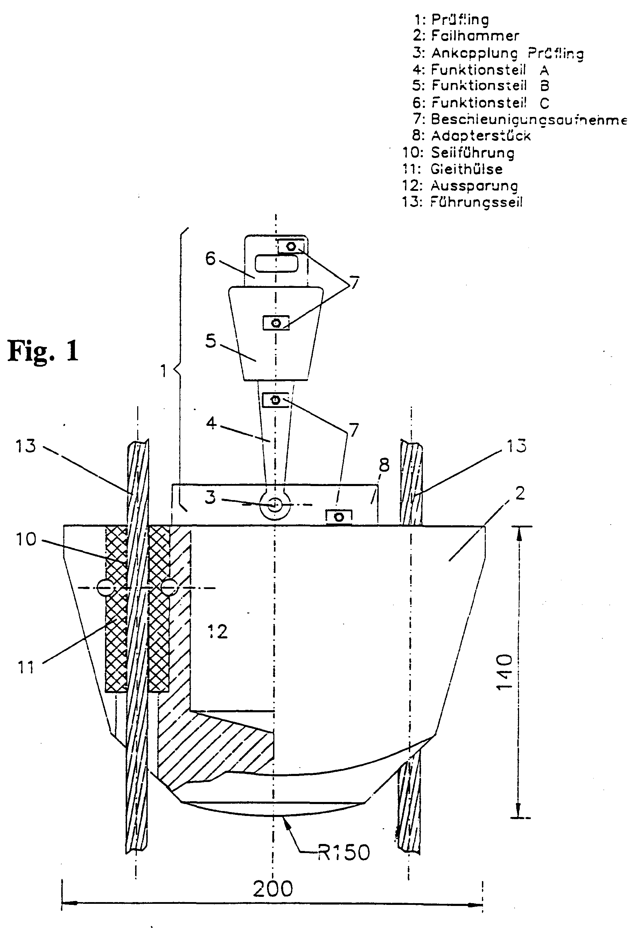

Der Prüfling 1 wird z.B. mittels Verschraubung 3 entweder direkt am Fallhammer 1, oder an einem mit dem Fallhammer verschraubten Adapterstück 8 fixiert, was montagetechnische Vorteile hat. Der Prüfling 1 besteht in der Regel aus mehreren Funktionsteilen 4, 5 und 6, die jedes mit wenigstens je einem Beschleunigungsaufnehmer 7 bestückt sind. Der Fallhammer 1 trägt ebenfalls einen Beschleunigungsaufnehmer 7 (Fig.1).

Diese Anordnung der Beschleunigungsaufnehmer 7 ermöglicht es, den Grundschock sowie die in den Funktionsteilen 4, 5, 6 (und ggf. folgenden) eingeleiteten Schockwirkungen quantitativ zu erfassen, das Schockübertragungsverhalten zu analysieren und ggf. gezielt konstruktive Maßnahmen zu ergreifen, um erkannte Schwachstellen zu beheben oder um den Prüfling bezüglich seiner schockgesicherten Funktionsfähigkeit zu optimieren.

Der Fallhammer 2 ist kompakt, d.h. aus einem Stück", mit integrierten Seilführungen 10, konusförmig und bezüglich seiner Hochachse um 180° im wesentlichen symmetrisch, um Taumelbewegungen zu minimieren.

Der Schwerpunkt ist durch Hohlformung 12 (z.B. Ausdrehen) des oberen Fallhammerteils deutlich tiefer gelegt, d.h. zur Prallfläche hin verschoben, um Kippbewegungen des Fallhammers 2 beim Aufprall zu vermindern. Die Prallfläche ist leicht sphärisch mit einem Radius R von ca. 150 - 200 mm geformt. (Figur 1). Die Masse des Fallhammers sowie die konstruktiven Maße hängen stark von dem Verwendungszweck ab. Im vorliegenden Anwendungsfall liegt die Masse bei ca 10 kg, die Maße in Figur 1 geben weitere Hinweise. Die sehr speziellen Anforderungen an das Material bezüglich Härte, Zähigkeit, Vermeidung von Rißbildung und Abplattung der Prallfläche im Dauerbetrieb werden von einem niedrig legierten, hochfesten Vergütungsstahl z.B. gemäB Klassifizierung 1.6959 nach DIN 17 007 erfüllt. Das Prallmedium 14 ist Verbrauchsmaterial, es kann zum schnellen und preiswerten Austausch z.B. als Scheibe im Scheibenhalter oder als schnell wechselbarer Block aus unlegiertem Baustahl hergestellt sein.

Die zum Fallturm gehörigen Hub-, Sicherungs- und Ausklinkvorrichtungen sind Stand der Technik.

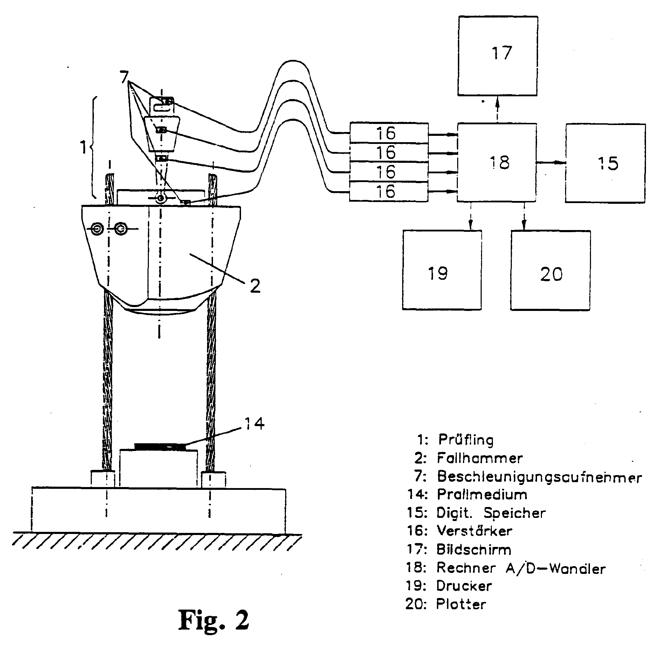

Zur Messung des Grundschocks am Fallhammer 2 sowie an den Funktionsteilen 4, 5, 6 und ggf. weiteren, werden Schockbeschleunigungsaufnehmer 7, vorzugsweise piezoresistiver Art, eingesetzt. Die Meßsignale der Beschleunigungsaufnehmer 7 durchlaufen die Verstärker 16, werden danach von einem Rechner mit Analog/Digitalwandler 18 erfaßt und auf einem externen digitalen Speicher 15 zur weiteren Auswertung abgespeichert. Der Darstellung der Meßsignale dienen der Bildschirm 17, sowie der Drucker 19 und der Plotter 20 (Figur 2).

Je nach Prüfobjekt kann es wichtig sein, mit welchem Ende der Prüfling 1 am Fallhammer 2 fixiert wird. Wenn eine solche Lageabhängigkeit besteht, sind mehrere Meßreihen mit den gebotenen Anordnungen (upside down und umgekehrt) durchzuführen.

Die vorliegende Erfindung wird anhand von 2 Zeichnungen näher erläutert; es zeigen:
- Figur 1: den Fallhammer 2 mit adaptiertem Prüfling 1 und Beschleunigungsaufnehmer 7
- Figur 2: den Prüfstand mit der Aufzeichnungs- und Auswerteanordnung.

## Patentansprüche

1. Verfahren zur dynamischen Prüfung eines mehrteiligen Prüflings auf Funktionsfähigkeit,
**dadurch gekennzeichnet,**
daß zur definierten und reproduzierbaren Schockbelastung an einem Ende des Prüflings eine schockartige Kraft eingeleitet wird und die resultierenden Schockbelastungen sowohl am Einleitungspunkt als auch an mindestens einem weiteren Glied des Prüflings gemessen und aufgezeichnet werden.

2. Vorrichtung zur dynamischen Prüfung eines mehrteiligen Prüflings auf Funktionsfähigkeit nach definierter und reproduzierbarer Schockbelastung,
**gekennzeichnet durch**
einen Fallhammer (2) mit einer Einrichtung (3, 8) zum Ankoppeln eines Endes des Prüflings (1), wobei am Fallhammer (2) und an mindestens einem weiteren Glied (4, 5, 6) des Prüflings (1) jeweils mindestens ein Beschleunigungsaufnehmer (7) angebracht ist.

3. Vorrichtung nach Anspruch 2,
**gekennzeichnet durch**
eine Signalverarbeitungseinrichtung (15 bis 20) zum Aufzeichnen, Verarbeiten und Darstellen von Ausgangssignalen der Beschleunigungsaufnehmer (7).

4. Vorrichtung nach einem der Ansprüche 1 oder 2,
**dadurch gekennzeichnet,**
daß der Fallhammer (2) einstückig ausgebildet ist.

5. Vorrichtung nach einem der Ansprüche 2 - 4,
**dadurch gekennzeichnet,**
daß der Fallhammer (2) im wesentlichen konisch geformt ist.

6. Vorrichtung nach einem der Ansprüche 2 - 5,
**dadurch gekennzeichnet,**
daß der Fallhammer (2) im wesentlichen symmetrisch zu seiner Hochachse ausgebildet ist.

7. Vorrichtung nach einem der Ansprüche 2 - 6
**dadurch gekennzeichnet,**
daß der Fallhammer (2) in seinem untersten Bereich eine sphärische Prallfläche aufweist.

8. Vorrichtung nach Anspruch 7,
**dadurch gekennzeichnet,**
daß die sphärische Prallfläche einen Radius (R) von ca. 150 - 200 mm aufweist.

9. Vorrichtung nach einem der vorhergehenden Ansprüche,
**dadurch gekennzeichnet,**
daß der Fallhammer (2) in seinem oberen Bereich eine Materialausnehmung aufweist, die so angebracht ist, daß der Schwerpunkt des Fallhammers in Richtung auf seine Unterseite verschoben ist.

10. Vorrichtung nach einem der Ansprüche 2 - 9,
**dadurch gekennzeichnet,**
daß der Fallhammer (2) über eingebaute Gleithülsen (11) in vertikalen Führungen (10) gelagert ist.

11. Vorrichtung nach einem der Ansprüche 2 - 10,
**dadurch gekennzeichnet,**
daß der Fallhammer (2) aus einem niedrig legierten, hochvergüteten Stahl gefertigt ist.

12. Vorrichtung nach Anspruch 11,
**dadurch gekennzeichnet,**
daß ein Stahl mit der Klassifizierung 1.6959 nach DIN 17007 verwendet wird.

## Claims

1. Method for dynamic testing of the functional performance of a multi-part test piece, characterized in that, for the purpose of application of a defined and reproducible shock load, a shock-type force is applied at one end of the test piece and the resulting shock loads are measured and recorded both at the point of application and on one or more additional elements of the test piece.

2. Device for dynamic testing of the functional performance of a multi-part test piece with a defined and reproducible shock load, characterized by a drop hammer (2) with a device (3, 8) for connecting one end of the test piece (1), with one or more acceleration sensors (7) being mounted both on the drop hammer (2) and on one or more additional elements (4, 5, 6) of the test piece (1).

3. Device according to Claim 2, characterized by a signal processing device (15 to 20) for recording, processing and displaying output signals from the acceleration sensors (7).

4. Device according to either of Claims 1 or 2,
characterized in that the drop hammer (2) is constructed as a single piece.

5. Device according to any one of Claims 2 - 4,
characterized in that the drop hammer (2) is essentially conical in form.

6. Device according to any one of Claims 2 - 5,
characterized in that the drop hammer (2) is essentially symmetrical relative to its vertical axis.

7. Device according to any one of Claims 2 - 6,
characterized in that the drop hammer (2) possesses a spherical impact surface in its lower section.

8. Device according to Claim 7, characterized in that the spherical impact surface has a radius (R) of approximately 150 - 200 mm.

9. Device according to any one of the preceding Claims, characterized in that there is a recess in the material of the upper section of the drop hammer (2), such that the centre of gravity of the drop hammer is displaced towards its lower end.

10. Device according to any one of Claims 2 - 9,
characterized in that the drop hammer (2) is mounted in vertical guides (10) by means of integrated slide sleeves (11).

11. Device according to any one of Claims 2 - 10,
characterized in that the drop hammer (2) is made from a low-alloy high-temper steel.

12. Device according to Claim 11, characterized in that a steel having the classification 1.6959 in accordance with DIN 17007 is used.

## Revendications

1. Procédé pour l'essai dynamique de la capabilité de fonctionner d'une éprouvette en plusieurs parties, **caractérisé en ce** que pour la sollicitation définie et reproductible par des chocs, une force de choc est appliquée à l'une des extrémités de l'éprouvette, et que les sollicitations par des chocs qui en résultent sont mesurées aussi bien au point d'introduction que sur au moins un autre élément de l'éprouvette, et enregistrées.

2. Dispositif pour l'essai dynamique de la capabilité de fonctionner d'une éprouvette en plusieurs parties après une sollicitation définie et reproductible par des chocs, **caractérisé en ce** qu'il comprend une masse tombante (2) avec un dispositif (3, 8) pour l'accouplement de l'une des extrémités de l'éprouvette (1), au moins un capteur d'accélération (7) étant prévu sur la masse tombante (2) et sur au moins un autre élément (4, 5, 6) de l'éprouvette (1).

3. Dispositif selon la revendication 2, caractérisé en ce qu'il comprend un dispositif de traitement des signaux (15 à 20) pour l'enregistrement, le traitement et la représentation de signaux de sortie des capteurs d'accélération (7).

4. Dispositif selon l'une des revendications 1 ou 2, caractérisé en ce que la masse tombante (2) est réalisée d'une seule pièce.

5. Dispositif selon l'une des revendications 2 à 4, caractérisé en ce que la masse tombante (2) présente une forme sensiblement conique.

6. Dispositif selon l'une des revendications 2 à 5, caractérisé en ce que la masse tombante (2) est conformée sensiblement symétriquement par rapport à son axe vertical.

7. Dispositif selon l'une des revendications 2 à 6, caractérisé en ce que la masse tombante (2) comporte dans sa partie la plus basse une surface de rebondissement sphérique.

8. Dispositif selon la revendication 7, caractérisé en ce que la surface de rebondissement sphérique présente un rayon (R) d'environ 150 à 200 mm.

9. Dispositif selon l'une des revendications précédentes, caractérisé en ce que la masse tombante (2) présente dans sa partie supérieure un évidement qui est disposé de telle façon que le centre de gravité de la masse tombante est déplacé en direction de sa face inférieure.

10. Dispositif selon l'une des revendications 2 à 9, caractérisé en ce que la masse tombante (2) est montée dans des guidages (10) verticaux par l'intermédiaire de douilles coulissantes (11) intégrées.

11. Dispositif selon l'une des revendications 2 à 10, caractérisé en ce que la masse tombante (2) est constituée d'un acier de traitement faiblement allié à résistance élevée.

12. Dispositif selon la revendication 11, caractérisé en ce qu'il utilise un acier de la classification 1.6959 selon DIN 17007.
